# EUROPÄISCHE PATENTSCHRIFT

(11) **EP 1 319 571 B1**
(45) Veröffentlichungstag und Bekanntmachung des Hinweises auf die Patenterteilung: **01.03.2006**
(21) Anmeldenummer: 02027599.6
(22) Anmeldetag: 10.12.2002
(51) Int. Cl.: B62D 1/06, B62D 1/04

(54) **Lenkvorrichtung für ein Kraftfahrzeug**
Steering device for a vehicle
Dispositif de direction pour véhicule automobile

(30) Priorität: 13.12.2001 DE 20120221 U
(43) Veröffentlichungstag der Anmeldung: 18.06.2003
(73) Patentinhaber: TRW Automotive Safety Systems GmbH, 63743 Aschaffenburg (DE)
(72) Erfinder: Lorenz, Christian, 63849 Leidersbach 3 (DE)
(74) Vertreter: Sulzbach, Werner

(56) Entgegenhaltungen:
- WO-A-99/12791

## Beschreibung

Die Erfindung betrifft eine Lenkvorrichtung für ein Kraftfahrzeug, mit einem feststehenden Skelett und einem auf dem Skelett verschiebbar gelagerten Betätigungsorgan.

Aus Sicherheits- und Komfortgründen werden seit einiger Zeit immer mehr Einrichtungen zur Betätigung verschiedener Fahrzeugfunktionen unmittelbar im Lenkrad angeordnet, damit der Fahrer nicht mehr gezwungen ist, zur Einschaltung derartiger Funktionen eine Hand vom Lenkrad zu nehmen. Die Übertragung von an einem drehbaren Lenkrad erzeugten elektrischen Signalen auf die in der Kraftfahrzeugkarosserie ortsfest angeordneten Stellglieder ist jedoch insbesondere dann nicht unproblematisch, wenn eine Vielzahl unterschiedlicher Signale übertragen werden muß. Es wurden daher schon feststehende oder im wesentlichen feststehende Lenkvorrichtungen vorgeschlagen, bei denen die mechanische Kopplung zwischen Lenkvorrichtung und Lenkgestänge durch einen Meßwertgeber an der Lenkvorrichtung und einen Stellantrieb am Lenkgestänge ersetzt worden ist. Bei derartigen Lenkvorrichtungen kann auf die üblichen maximal zweieinhalb bis vier Umdrehungen des Lenkrads zur Erzielung des maximalen Radeinschlags verzichtet und der eigentliche Stellweg für die Betätigung der lenkbaren Räder auf einen Drehwinkel von 30° oder weniger beschränkt werden. Dadurch wird die Übertragung einer Vielzahl von Signalen unproblematisch, weil die Betätigungseinrichtungen an Teilen der Lenkvorrichtung angeordnet werden können, die relativ zur Karosserie feststehend ausgebildet sind. Die Leitungsführung zur Herstellung einer elektrischen Verbindung zwischen den Betätigungseinrichtungen und den feststehenden Teilen ist daher wesentlich vereinfacht.

Eine mechanische Entkopplung und elektrische Übertragung des Lenkbefehls an die lenkbaren Räder ist auch dann erforderlich, wenn über moderne Sicherheitssysteme eine fahrerunabhängige Fahrzeugstabilisierung erreicht und dabei auch auf den Einstellwinkel der lenkbaren Räder Einfluß genommen werden soll.

Die EP-A-1 046 572 beschreibt eine Lenkvorrichtung mit einem nicht drehbaren Gestell, das eine Symmetrieachse und zwei bogenförmige Führungsabschnitte aufweist, einem Paar miteinander über Seilzüge gekoppelter Handgriffe, die an den Führungsabschnitten gleichsinnig verschiebbar gelagert sind und sich längs der Führungsabschnitte und relativ zur Symmetrieachse um ein begrenztes Maß verschieben lassen, sowie einem Meßwertgeber zur Erzeugung eines elektrischen oder elektronischen Signals zur Bestimmung der Lage der beiden Handgriffe relativ zum Gestell.

Die WO-A-99/12791 betrifft eine Lenkvorrichtung für ein Kraftfahrzeug mit einem Betätigungsorgan zur Einleitung einer Lenkbewegung und einem Lenkgestänge zur Übertragung der Lenkbewegung auf die Räder, bei der das Betätigungsorgan aus einem nicht drehbaren Lenkrad besteht, in dessen Kranz ein relativ zum Kranz beweglicher, bandförmiger oder kettenartiger Betätigungsring und ein Meßwertgeber zur Erzeugung eines elektrischen oder elektronischen Positionssignals für den Betätigungsring angeordnet sind. Das Lenkgestänge wird von einem Stellantrieb betätigt, der von einer elektrischen oder elektronischen Regeleinrichtung in Abhängigkeit von dem Positionssignal ansteuerbar ist.

Die vorliegende Erfindung schafft eine Lenkvorrichtung, die weniger aufwendig konstruiert ist und daher günstiger gefertigt werden kann. Erfindungsgemäß wird hierzu eine Lenkvorrichtung für ein Kraftfahrzeug bereitgestellt, mit einem feststehenden Skelett, welches einen im wesentlichen bogenförmigen Skelettabschnitt aufweist, einem auf dem Skelett verschiebbar gelagerten Betätigungsorgan mit zwei sich im wesentlichen gegenüberliegenden Angriffsabschnitten, wobei das Betätigungsorgan den Skelettabschnitt im Querschnitt ringförmig umgreift und sich zwischen den Angriffsabschnitten durchgehend entlang des bogenförmigen Skelettabschnitts erstreckt.

Das Skelett kann insbesondere aus Blech, Kunststoff, Magnesiumdruckguß, Aluminiumdruckguß, Polyurethan oder faserverstärktem Polyurethan gebildet sein.

Die Lenkvorrichtung umfaßt vorzugsweise einen Meßwertgeber zur Erzeugung eines elektrischen oder elektronischen Signals, wobei der Meßwertgeber an dem bogenförmigen Skelettabschnitt angeordnete Sensoren eines Wegmeßsystems beinhaltet, welche die Verschiebung des Betätigungsorgans relativ zu dem Skelettabschnitt erfassen. Über in dem Skelett angeordnete Leitungen kann der Meßwertgeber mit einer Elektronikeinheit verbunden sein, die das vom Meßwertgeber erzeugte elektrische oder elektronische Signal aufnimmt und in ein Lenksignal zur Ansteuerung eines Stellantriebs für lenkbare Räder eines Kraftfahrzeugs umwandelt.

Bevorzugt beschreibt der im wesentlichen bogenförmige Skelettabschnitt wenigstens einen Halbkreis. In einer besonders bevorzugten Ausführungsform ist der Skelettabschnitt jedoch als Vollkreis ausgebildet und besitzt somit die Form eines herkömmlichen Lenkrads.

Das Betätigungsorgan kann aus miteinander verbundenen Segmentabschnitten zusammengesetzt sein. Vorteilhafterweise ist das Betätigungsorgan jedoch aus miteinander verbundenen Halbschalen zusammengesetzt, wodurch die Herstellung erleichtert wird. Das Betätigungsorgan kann aus den für herkömmliche Lenkräder bekannten Materialien, wie Holz, Leder, Kunststoff, Polyurethan, Metall, oder eine Kombination dieser Materialien gebildet sein.

Skelettabschnitt und Betätigungsorgan können zusammen Lagereigenschaften aufweisen. In vorteilhafter Weise ist zwischen dem Skelettabschnitt und dem Betätigungsorgan aber ein Lagerelement angeordnet, das als Gleitlager oder Wälzlager ausgebildet sein kann.

Besonders bevorzugt ist das Betätigungsorgan als herkömmlicher Lenkradkranz ausgebildet, der dann auf dem kreisförmigen Skelettabschnitt drehbar gelagert ist. Damit wird ein herkömmliches Lenkrad nachgebildet, welches ein elektronisch unterstütztes Lenken erlaubt.

Falls die erfindungsgemäße Lenkvorrichtung einen nicht drehsymmetrischen Skelettabschnitt aufweist, ist das Betätigungsorgan bevorzugt aus einem flexiblen Material gebildet, um gegebenenfalls in Kombination mit den Lagerelementen eine nicht kreisförmige Lenkbewegung zu ermöglichen.

Die Angriffsabschnitte für die Hände des Fahrers können zur Definition einer Stellung für die Geradeausfahrt optisch oder haptisch von den übrigen Bereichen des Betätigungsorgans abgesetzt sein.

Schließlich kann das Betätigungsorgan der erfindungsgemäßen Lenkvorrichtung einen Durchbruch aufweisen, wobei der Skelettabschnitt in diesen Durchbruch eingreift und diesen abschließt. Diese Ausführungsform ist insbesondere dann bevorzugt, wenn mit der erfindungsgemäßen Lenkvorrichtung ein herkömmliches Lenkrad nachgebildet werden soll, um die Akzeptanz beim Kunden zu erhöhen. Bei herkömmlichen Lenkrädern ist ein als Vollkreis ausgebildeter Skelettabschnitt über Speichen mit einer Lenkradnabe verbunden. Der umlaufende Durchbruch im Betätigungsorgan der erfindungsgemäßen Lenkvorrichtung entspricht im wesentlichen der Dicke der Speichen und stellt somit die freie Verschiebbarkeit des Betätigungsorgans sicher. Die außerhalb des Speichenbereichs von dem Durchbruch erzeugte Lücke kann durch einen entsprechend geformten Ansatz an dem Skelettabschnitt geschlossen werden, der in den Durchbruch eingreift. Vorteilhafterweise kann dieser Ansatz gegenüber dem Durchbruch etwas zurückgelegt sein, um die Reibung der das Betätigungsorgan bzw. der Lenkradkranz drehenden Hand zum feststehenden Skelett zu verringern.

Besonders vorteilhaft erweist sich die feststehende Konstruktion des Lenkrads im Rückhaltefall nach einem Fahrzeugunfall, da das Lenkrad mit einem feststehenden Gassackmodul ausgestattet werden kann, das einen asymmetrischen Gassack aufweist, so daß eine bessere, an die jeweilige Unfallsituation angepaßte Rückhaltewirkung erzielt werden kann.

Die erfindungsgemäße Lenkvorrichtung weist im Vergleich zu den bekannten Lenkvorrichtungen, die ein elektronisch unterstützes Lenken (Steering by Wire) ermöglichen, eine wesentlich einfachere Konstruktion mit weniger beweglichen Bauteilen auf und ist daher sowohl wartungsfreundlicher als auch kostengünstiger herzustellen.

Gegenüber den bisher bekannten Lösungen entfallen die Vorrichtungen zur Kopplung der Handgriffe oder sonstiger in den Lenkradkranz eingebrachter mechanischer Führungen. Dies wird dadurch ermöglicht, daß sich das erfindungsgemäße Betätigungsorgan einerseits durchgehend zwischen den Angriffsabschnitten für die Hände des Fahrers erstreckt und so keine zusätzliche mechanische Kopplung notwendig ist und andererseits durch die ringförmige Lagerung des Betätigungsorgans auf dem Skelett keine zusätzlichen Führungen vorgesehen werden müssen.

Die Nachbildung eines herkömmlichen Lenkrads erhöht darüber hinaus die Akzeptanz der neuen Technologie des elektronisch unterstützten Lenkens bei Fahrzeugherstellern und Endkunden. Der Fahrer muß insbesondere nicht seine Fahrgewohnheiten ändern, da beispielsweise ein Abstützen am Lenkrad keine ungewollten Lenkbewegungen auslöst. Schließlich ermöglicht die erfindungsgemäße Lenkvorrichtung die Anwendung herkömmlicher Fertigungstechniken für das Skelett und den separat als Betätigungsorgan herzustellenden Lenkradkranz. Die Lenkvorrichtung unterliegt somit keinen Beschränkungen hinsichtlich des Materials und des Designs.

Weitere Merkmale und Vorteile ergeben sich aus der nachfolgenden Beschreibung einer besonderen Ausführungsform unter Bezugnahme auf die Zeichnungen. In den Zeichnungen zeigen:
- Figur 1 die perspektivische Ansicht einer erfindungsgemäßen Lenkvorrichtung und
- Figur 2 eine Schnittansicht entlang der Linie A-A von Figur 1.

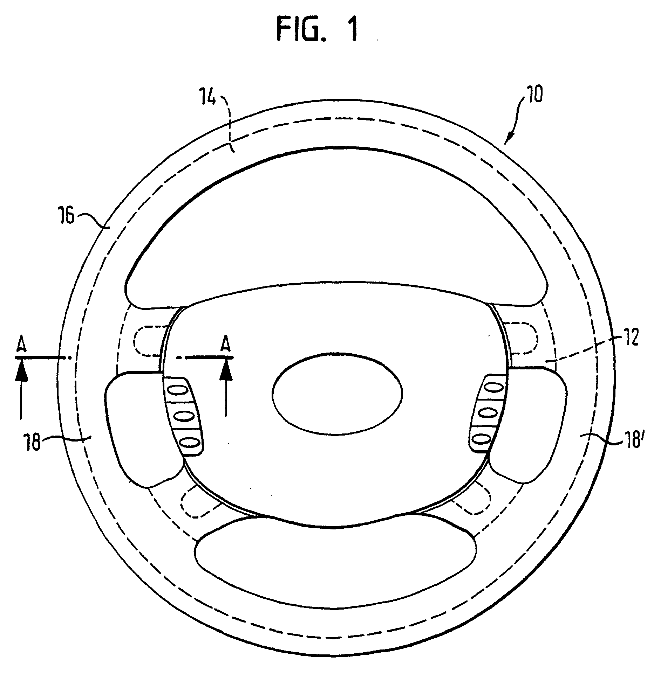

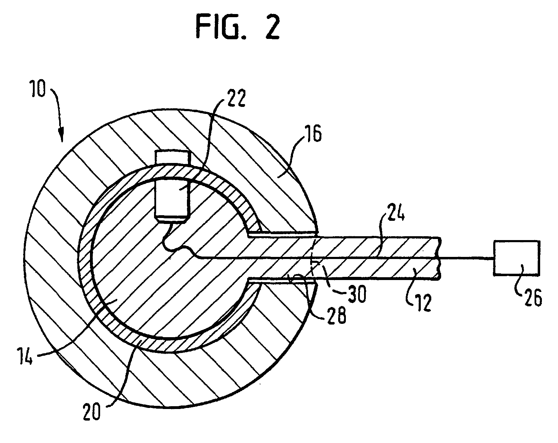

Die in den Figuren 1 und 2 gezeigte Lenkvorrichtung 10 weist ein feststehendes Skelett 12 mit einem im wesentlichen bogenförmigen Skelettabschnitt 14 auf. Bei der hier gezeigten Ausführungsform ist der bogenförmige Skelettabschnitt 14 als Vollkreis ausgebildet. Auf dem Skelettabschnitt 14 ist ein Betätigungsorgan 16 verschiebbar gelagert. Das Betätigungsorgan 16 weist zwei sich im wesentlichen gegenüberliegende Angriffsabschnitte 18, 18' auf und erstreckt sich zwischen den Angriffsabschnitten 18, 18' durchgehend entlang des bogenförmigen Skelettabschnitts 14. Bei der hier gezeigten bevorzugten Ausführungsform ist das Betätigungsorgan nach Art eines herkömmlichen Lenkradkranzes ausgebildet, der sich auf dem feststehenden Skelettabschnitt bewegen läßt und damit die Drehbewegung eines herkömmlichen Lenkrads nachahmt.

Der Lenkradkranz bzw. das Betätigungorgan 16 umgreift den bogenförmigen Skelettabschnitt im Querschnitt ringförmig, so daß der Fahrer des Kraftfahrzeugs die Lenkvorrichtung in gewohnter Weise an den Angriffsabschnitten 18, 18' fest umgreifen kann. Der Fahrer ist somit nicht auf die Betätigung von schwer zugänglichen Handgriffen oder Einlagen im Lenkradkranz angewiesen.

Zwischen dem Betätigungsorgan 16 und dem bogenförmigen Skelettabschnitt 14 ist bevorzugt ein Lagerelement 20, beispielweise ein Gleitlager oder ein Wälzlager, angeordnet. Falls die Kombination aus Betätigungsorgan 16 und Skelettabschnitt 14 selbst Lagereigenschaften aufweist, kann jedoch auf das Lagerelement 20 verzichtet werden.

Die Bewegung des Betätigungsorgans 16 relativ zum bogenförmigen Skelettabschnitt 14 wird durch zwischen diesen angeordneten Sensoren 22 einer Wegmeßeinrichtung erfaßt. Das von den Sensoren erzeugte elektrische oder elektronische Signal wird über in dem Skelett 12 verlaufende Leitungen 24 zu einer Elektronikeinheit 26 im Fahrzeug geleitet, die das Signal erfaßt und in ein Lenksignal zur Ansteuerung eines Stellantriebs für die Einstellung lenkbarer Kraftfahrzeugräder (hier nicht gezeigt) umwandelt.

Der den bogenförmigen Skelettabschnitt 14 ringförmig umgreifende Lenkradkranz bzw. das Betätigungsorgan 16 ist mit einem Durchbruch 28 versehen, in den der Speichenbereich des Skeletts 12 bzw. ein an dem bogenförmigen Skelettabschnitt gebildeter Ansatz 30 eingreifen. Der Ansatz 30 schließt den Durchbruch 28 ab und ist bevorzugt gegenüber der Oberfläche des Betätigungsorgans 16 bzw. des Lenkradkranzes etwas zurückgesetzt. Damit wird beim Umgreifen des Lenkradkranzes bzw. des Betätigungsorgans 16 eine Reibung der Hände des Fahrers mit dem Lenkradskelett 12 bzw. dem bogenförmigen Skelettabschnitt 14 vermieden.

Die erfindungsgemäße Lenkvorrichtung bietet das gleiche Erscheinungsbild wie ein herkömmliches Lenkrad und läßt sich auch analog zu einem herkömmlichen Lenkrad verwenden. Damit wird die Akzeptanz durch den Endkunden und die Fahrzeughersteller erhöht. Außerdem können zur Herstellung der erfindungsgemäßen Lenkvorrichtung die gleichen Materialien verwendet werden, wie für die Herstellung herkömmlicher Lenkräder. So läßt sich beispielsweise das Betätigungsorgan 16 bzw. der Lenkradkranz aus bekannten Materialien wie Holz, Kunststoff, Polyurethan und Metall sowie Kombinationen dieser Materialien bilden. Zur Herstellung des Lenkradkranzes bzw. des Betätigungsorgans 16 können vorgefertigte Halbschalen bzw. Segmentabschnitte aus diesen Materialien miteinander verbunden werden.

Die erfindungsgemäße Lenkvorrichtung ist jedoch nicht auf kreisförmige Ausgestaltungen entsprechend den herkömmlichen Lenkrädern beschränkt. Es können auch nicht drehsymmetrische Ausführungsformen verwendet werden. In diesem Fall ist das Betätigungsorgan vorzugweise aus einem flexiblen Material gebildet, um nicht kreisförmige Verschiebungen zu ermöglichen.

## Patentansprüche

1. Lenkvorrichtung für ein Kraftfahrzeug, mit einem feststehenden Skelett, welches einen im wesentlichen bogenförmigen Skelettabschnitt aufweist, einem auf dem Skelettabschnitt verschiebbar gelagerten Betätigungsorgan mit zwei sich im wesentlichen gegenüberliegenden Angriffsabschnitten, wobei das Betätigungsorgan den Skelettabschnitt im Querschnitt ringförmig umgreift und sich zwischen den Angriffsabschnitten durchgehend entlang des bogenförmigen Skelettabschnitts erstreckt.

2. Lenkvorrichtung nach Anspruch 1, **dadurch gekennzeichnet, daß** das Skelett aus Blech, Kunststoff, Magnesiumdruckguß, Aluminiumdruckguß, Polyurethan oder faserverstärktem Polyurethan gebildet ist.

3. Lenkvorrichtung nach Anspruch 1 oder 2, ferner **gekennzeichnet durch** einen Meßwertgeber zur Erzeugung eines elektrischen oder elektronischen Signals, wobei der Meßwertgeber an dem bogenförmigen Skelettabschnitt angeordnete Sensoren eines Wegmeßsystems umfaßt, welche die Verschiebung des Betätigungsorgans relativ zu dem Skelettabschnitt erfassen.

4. Lenkvorrichtung nach Anspruch 3, **dadurch gekennzeichnet, daß** der Meßwertgeber über in dem Skelett angeordnete Leitungen mit einer Elektronikeinheit verbunden ist, die das vom Meßwertgeber erzeugte elektrische oder elektronische Signal aufnimmt und in ein Lenksignal zur Ansteuerung eines Stellantriebs für lenkbare Räder eines Kraftfahrzeugs umwandelt.

5. Lenkvorrichtung nach einem der Ansprüche 1 bis 4, **dadurch gekennzeichnet, daß** der im wesentlichen bogenförmige Skelettabschnitt wenigstens einen Halbkreis beschreibt.

6. Lenkvorrichtung nach Anspruch 5, **dadurch gekennzeichnet, daß** der bogenförmige Skelettabschnitt einen Vollkreis beschreibt und das Betätigungsorgan als Lenkradkranz ausgebildet ist.

7. Lenkvorrichtung nach einem der Ansprüche 1 bis 6, **dadurch gekennzeichnet, daß** das Betätigungsorgan aus miteinander verbundenen Segmentabschnitten zusammengesetzt ist.

8. Lenkvorrichtung nach einem der Ansprüche 1 bis 6, **dadurch gekennzeichnet, daß** das Betätigungsorgan aus miteinander verbundenen Halbschalen zusammengesetzt ist.

9. Lenkvorrichtung nach einem der vorhergehenden Ansprüche, **dadurch gekennzeichnet, daß** das Betätigungsorgan aus Holz, Leder, Kunststoff, Polyurethan, Metall oder einer Kombination dieser Materialien gebildet ist.

10. Lenkvorrichtung nach einem der vorhergehenden Ansprüche, **dadurch gekennzeichnet, daß** zwischen dem Skelettabschnitt und dem Betätigungsorgan ein Lagerelement angeordnet ist.

11. Lenkvorrichtung nach Anspruch 10, **dadurch gekennzeichnet, daß** das Lagerelement ein Gleitlager oder ein Wälzlager ist.

12. Lenkvorrichtung nach einem der vorhergehenden Ansprüche, **dadurch gekennzeichnet, daß** der bogenförmige Skelettabschnitt nicht drehsymmetrisch ist.

13. Lenkvorrichtung nach Anspruch 12, **dadurch gekennzeichnet, daß** das Betätigungsorgan aus einem flexiblen Material gebildet ist.

14. Lenkvorrichtung nach einem der vorhergehenden Ansprüche, **dadurch gekennzeichnet, daß** das Betätigungsorgan einen umlaufenden Durchbruch aufweist, wobei der Skelettabschnitt in den Durchbruch eingreift und diesen abschließt.

## Claims

1. A steering device for a motor vehicle, comprising a stationary skeleton which has an essentially arc-shaped skeleton section, an actuation member that is movably mounted on the skeleton section and that has two contact sections essentially opposite from each other, the actuation member engaging around the skeleton section with a ring-shaped cross section and extending between the contact sections continuously along the arc-shaped skeleton section.

2. The steering device according to Claim 1, **characterized in that** the skeleton is made of sheet metal, plastic, diecast magnesium, diecast aluminum, polyurethane or fiber-reinforced polyurethane.

3. The steering device according to Claim 1 or 2, further **characterized by** a measurement transducer for generating an electric or electronic signal, the measurement transducer comprising sensors of a path measuring system that are arranged on the arc-shaped skeleton section and detect the movement of the actuation member relative to the skeleton section.

4. The steering device according to Claim 3, **characterized in that**, via lines arranged in the skeleton, the measurement transducer is connected to an electronic unit that picks up the electric or electronic signal generated by the measurement transducer and converts it into a steering signal for controlling an actuator for steerable wheels of a motor vehicle.

5. The steering device according to any of Claims 1 to 4, **characterized in that** the essentially arc-shaped skeleton section describes at least a semi-circle.

6. The steering device according to Claim 5, **characterized in that** the arc-shaped skeleton section describes a full circle and the actuation member is configured as a steering wheel rim.

7. The steering device according to any of Claims 1 to 6, **characterized in that** the actuation member is made up of segment sections joined to each other.

8. The steering device according to any of Claims 1 to 6, **characterized in that** the actuation member is made up of half-shells joined to each other.

9. The steering device according to any of the preceding claims, **characterized in that** the actuation member is made of wood, leather, plastic, polyurethane, metal or a combination of these materials.

10. The steering device according to any of the preceding claims, **characterized in that** a bearing element is arranged between the skeleton section and the actuation member.

11. The steering device according to Claim 10, **characterized in that** the bearing element is a sliding bearing or a roller bearing.

12. The steering device according to any of the preceding claims, **characterized in that** the arc-shaped skeleton section is rotationally non-symmetrical.

13. The steering device according to Claim 12, **characterized in that** the actuation member is made of a flexible material.

14. The steering device according to any of the preceding claims, **characterized in that** the actuation member has a surrounding cutout, the skeleton section engaging into the cutout and closing it.

## Revendications

1. Dispositif de direction pour un véhicule automobile, comportant un squelette fixe qui présente un tronçon de squelette sensiblement en forme d'arc, un organe d'actionnement monté à déplacement sur le tronçon de squelette avec deux tronçons de saisie sensiblement opposés l'un à l'autre, l'organe d'actionnement entourant le tronçon de squelette avec une section transversale de forme annulaire et s'étendant de manière continue le long du tronçon de squelette en forme d'arc entre les tronçons de saisie.

2. Dispositif de direction selon la revendication 1, **caractérisé en ce que** le squelette est réalisé en tôle, en matière plastique, en magnésium coulé sous pression, en aluminium coulé sous pression, en polyuréthane ou en polyuréthane renforcé par des fibres.

3. Dispositif de direction selon la revendication 1 ou 2, **caractérisé en outre par** un transducteur de mesure destiné à engendrer un signal électrique ou électronique, le transducteur de mesure comprenant des capteurs d'un système de mesure de déplacement, agencés sur le tronçon de squelette sensiblement en forme d'arc, lesquels saisissent le déplacement de l'organe d'actionnement par rapport au tronçon de squelette.

4. Dispositif de direction selon la revendication 3, **caractérisé en ce que** le transducteur de mesure est relié par des lignes agencées dans le squelette à une unité électronique qui reçoit le signal électrique ou électronique engendré par le transducteur de mesure et le transforme en un signal de direction pour piloter un actionneur pour des roues dirigeables d'un véhicule automobile.

5. Dispositif de direction selon l'une des revendications 1 à 4, **caractérisé en ce que** le tronçon de squelette sensiblement en forme d'arc décrit au moins un demi-cercle.

6. Dispositif de direction selon la revendication 5, **caractérisé en ce que** le tronçon de squelette en forme d'arc décrit un cercle entier et l'organe d'actionnement est réalisé sous forme de couronne de volant de direction.

7. Dispositif de direction selon l'une des revendications 1 à 6, **caractérisé en ce que** l'organe d'actionnement est composé de tronçons de segments reliés les uns aux autres.

8. Dispositif de direction selon l'une des revendications 1 à 6, **caractérisé en ce que** l'organe d'actionnement est composé de demi-coques reliées les unes aux autres.

9. Dispositif de direction selon l'une des revendications précédentes, **caractérisé en ce que** l'organe d'actionnement est réalisé en bois, en cuir, en matière plastique, en polyuréthane, en métal ou en une combinaison de ces matériaux.

10. Dispositif de direction selon l'une des revendications précédentes, **caractérisé en ce qu'**un élément de palier est agencé entre le tronçon de squelette et l'organe d'actionnement.

11. Dispositif de direction selon la revendication 10, **caractérisé en ce que** l'élément de palier est un palier à glissement ou un palier à roulement.

12. Dispositif de direction selon l'une des revendications précédentes, **caractérisé en ce que** le tronçon de squelette en forme d'arc n'est pas a symétrie de révolution.

13. Dispositif de direction selon la revendication 12, **caractérisé en ce que** l'organe d'actionnement est réalisé en un matériau flexible.

14. Dispositif de direction selon l'une des revendications précédentes, **caractérisé en ce que** l'organe d'actionnement présente une percée périphérique, le tronçon de squelette s'engageant dans la percée et fermant celle-ci.
